# FASCICULE DE BREVET EUROPEEN

(11) **EP 2 618 194 B1**
(45) Date de publication et mention de la délivrance du brevet: **08.04.2015**
(21) Numéro de dépôt: 13151006.7
(22) Date de dépôt: 11.01.2013
(51) Int. Cl.: G02B 6/44

(54) **Dispositif modulaire de connexion**
Modulare Verbindungsvorrichtung
Modular connection device

(30) Priorité: 19.01.2012 FR 1250553
(43) Date de publication de la demande: 24.07.2013
(73) Titulaire: Nexans, 75008 Paris (FR)
(72) Inventeur: Renard, Xavier, 78410 Aubergenville (FR); Tronconi, Giovanni, 75016 Paris (FR); Monatlik, Jean-Christophe, 92150 Suresnes (FR)
(74) Mandataire: Gauer, Pierre

(56) Documents cités:
- EP-A1- 2 233 956
- JP-A- 9 197 139
- JP-A- 2001 133 634
- JP-A- 2002 022 968
- US-A1- 2005 281 526
- US-A1- 2006 062 538

## Description

La présente invention a pour objet un dispositif modulaire de connexion permettant de connecter des fibres optiques d'un réseau de communication externe à des fibres optiques d'un réseau d'utilisateurs, à l'aide de modules d'opérateurs et d'un module d'utilisateurs. Le dispositif peut notamment être utilisé dans les réseaux FTTH.

Un réseau FTTH est un réseau de télécommunications dont la partie terminale arrivant chez l'utilisateur est constituée de fibres optiques. FTTH est l'abréviation du terme anglais « Fiber To The Home », signifiant littéralement en français « fibre jusqu'au foyer ». Il s'agit du nom d'une technologie visant à remplacer les technologies DSL (Digital Subscriber Line en langue anglaise).

Dans ces réseaux, l'utilisateur peut choisir parmi différents opérateurs. Il existe principalement deux façons d'y parvenir.

Soit l'utilisateur possède plusieurs fibres, et il peut alors choisir la fibre correspondant à l'opérateur souhaité. Soit il n'y a qu'une fibre, et le dispositif de connexion de fibres optiques doit permettre aux différents opérateurs de se connecter à cette unique fibre. Les opérateurs supplémentaires peuvent arriver tardivement par rapport à l'installation d'origine et il convient de pouvoir distribuer les fibres optiques issues de ces nouveaux opérateurs. Les dispositifs de connexion de fibres optiques comprennent dans ce cas un module par opérateur, ainsi qu'un module d'utilisateurs, et la connexion est réalisée entre le module de l'opérateur et le module de l'utilisateur à l'aide de cordons de raccordement ou jarretières.

Un tel dispositif de distribution de fibre optique est par exemple décrit dans le document WO 2009/031172. Dans ce dispositif, les modules des opérateurs et le module des utilisateurs sont empilés verticalement. Dans cette configuration, le raccordement entre deux modules est réalisé sur le côté. Ceci a pour inconvénient que l'installateur ne voit pas correctement les zones de connexion, tout particulièrement lorsqu'il y a déjà beaucoup de connecteurs installés. En outre, l'espace d'accès n'est pas suffisant, ce qui peut entraîner dans certains cas une mauvaise connexion optique.

Cette structure a également pour inconvénient que pour accéder aux modules situés dans les zones supérieures, l'opérateur doit traverser des modules qui ne lui appartiennent pas. Il doit ainsi avoir l'autorisation des autres opérateurs et peut abîmer des fibres de ces modules lors de l'installation. Les surlongueurs des fibres des autres opérateurs obstruent son passage. Enfin, les cordons de raccordement s'entrecroisent d'un module à l'autre ce qui rend l'installation longue et complexe.

La présente invention vise à remédier à ces inconvénients.

L'invention a pour objet un dispositif modulaire de connexion de fibres optiques d'un réseau opérateur à des fibres optiques d'un réseau d'utilisateurs, le dispositif comprenant :
- une pluralité de modules d'opérateurs, chaque module d'opérateur étant apte à être connecté à des fibres optiques d'un réseau opérateur, et
- un module d'utilisateurs, apte à être connecté à des fibres optiques d'un réseau d'utilisateurs,

Les modules d'opérateurs et le module d'utilisateurs étant munis de connecteurs, la connexion entre les connecteurs d'un module d'opérateur et les connecteurs du module d'utilisateur étant réalisé à l'aide de cordons de raccordement.

Dans le dispositif selon l'invention, les modules d'opérateurs sont empilés les uns au-dessus des autres, formant ainsi un empilement de modules d'opérateur, et le module d'utilisateurs est disposé à côté dudit empilement, de préférence dans la hauteur de l'empilement. Les modules sont des éléments distincts et séparables.

Ainsi, dans cette configuration, le module d'utilisateurs n'est pas disposé au-dessus des modules d'opérateurs, comme c'est le cas dans les dispositifs de l'état de la technique, mais à côté des modules d'opérateur, dans un espace situé dans la hauteur de l'empilement des modules d'opérateur. Cette configuration facilite grandement la gestion des connexions, car la gestion de la connexion n'a pas à se faire au-dessus ou en dessous de l'empilement, mais latéralement.

En configuration opérationnelle du dispositif, chaque module d'opérateur comprend avantageusement une ouverture placée en vis-à-vis d'une ouverture du module d'utilisateurs, de manière à permettre le passage de cordons de raccordement depuis le module d'opérateur vers le module d'utilisateurs.

Les modules d'opérateur et le module d'utilisateurs peuvent être de forme allongée et, en configuration opérationnelle du dispositif, les modules d'opérateur peuvent être disposés de manière à ce que leurs axes longitudinaux soient horizontaux et le module d'utilisateurs peut être disposé de manière à ce que son axe longitudinal soit vertical.

Chaque module d'opérateur peut comprendre une ou plusieurs cassettes de lovage de fibres et de maintien d'épissures.

Chaque module d'opérateur peut comprendre un compartiment de lovage de fibres.

Chaque module d'opérateur peut être muni de connecteurs alignés horizontalement, par exemple sous la forme d'une ou plusieurs rangées horizontales. Le module d'opérateur peut également ne pas avoir de panneau de brassage, ce qui est le cas avec des demi-cordons (également appelés « pigtails » en langue anglaise) longs ou avec un diviseur de signal optique muni de branches longues.

Les connecteurs des modules d'opérateurs peuvent être disposés de manière à faire face à l'utilisateur en configuration opérationnelle du dispositif.

Le module d'utilisateurs peut être muni de connecteurs alignés verticalement, par exemple sous la forme d'une ou plusieurs rangées verticales.

Les connecteurs des modules d'opérateur et du module d'utilisateurs peuvent également être disposés selon un ordre matriciel, formant ainsi une grille sur un panneau.

Les connecteurs du module d'utilisateurs peuvent être disposés de manière à faire face à l'utilisateur en configuration opérationnelle du dispositif.

Les cordons de raccordement sont des moyens de connexion entre au moins un module d'opérateur et le module d'utilisateurs. On peut également utiliser comme moyen de connexion des demi-cordons longs (pigtail long) ou une branche longue d'un diviseur de signal optique provenant du module d'opérateur.

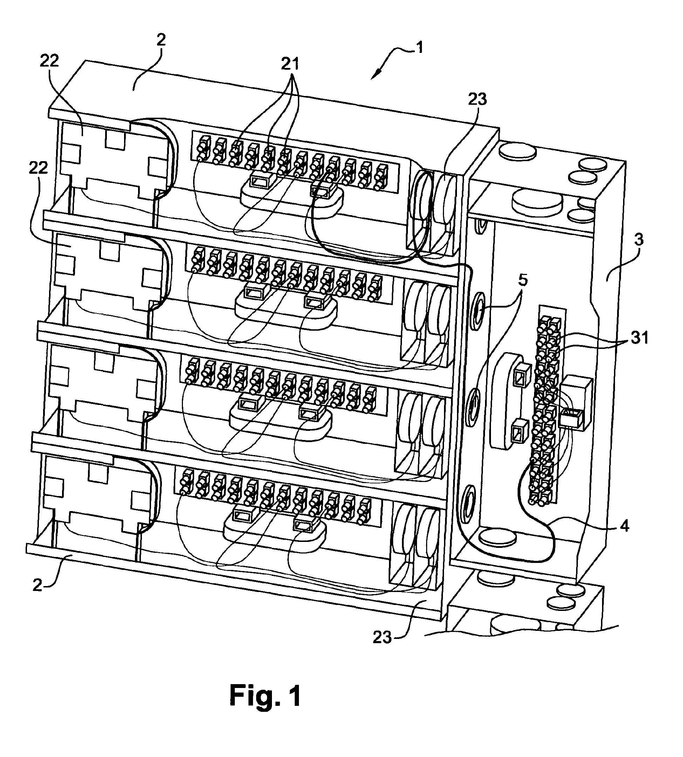

D'autres caractéristiques et avantages de la présente invention apparaîtront plus clairement à la lecture de la description suivante donnée à titre d'exemple illustratif et non limitatif et faite en référence à la figure 1 annexée qui est une vue ouverte en perspective d'un dispositif de distribution de fibres optiques selon l'invention.

Le dispositif 1, tel qu'illustré à la figure 1, comprend une pluralité de modules d'opérateur 2 ainsi qu'un unique module d'utilisateurs 3. Chaque module 2,3 est structurellement indépendant des autres modules 2,3. Les modules 2,3 sont illustrés en configuration ouvertes, c'est-à-dire lorsque la face avant des modules 2,3 est enlevée pour pouvoir intervenir à l'intérieur des modules 2,3.

Le module d'utilisateurs 3 peut par exemple être raccordé à un réseau d'utilisateurs d'un immeuble. Le module d'utilisateurs 3 permet de connecter un nombre prédéterminé d'utilisateurs, par exemple 24 utilisateurs. Les modules d'opérateur 2 sont quant à eux connectés à un réseau de communication extérieur et chacun d'entre eux appartient à un opérateur connecté au réseau d'utilisateurs par l'intermédiaire du dispositif de connexion 1.

Les modules d'opérateur 2 et le module d'utilisateurs 3 peuvent par exemple être des boîtiers ou caissons, de forme parallélépipédique, comprenant une face avant, non représentée pour visualiser l'intérieur des modules 2,3, une face arrière, et quatre faces latérales.

Les modules d'opérateur 2 comprennent chacun des connecteurs 21, destinés à connecter des fibres optiques d'un réseau de communication externe à des fibres optiques dirigées vers le module d'utilisateurs 3. Les connecteurs 21 peuvent être disposés sur la face arrière des modules d'opérateur 2, de manière à être accessibles de face pour l'installateur. Ils peuvent être alignés horizontalement.

Les modules d'opérateur 2 peuvent également comprendre chacun une ou plusieurs cassettes 22 de lovage de fibres et de maintien d'épissures, qui sont par exemple disposées sur la face arrière du module 2. Les cassettes 22 sont des boîtes de lovage et de protection de fibres optiques et souvent également de protection de raccords entre les fibres optiques lovées. Chaque cassette 22 est affectée à plusieurs fibres à raccorder individuellement à plusieurs autres fibres. Les cassettes 22 peuvent être utilisées pour souder des fibres à un diviseur de signal optique. Les diviseurs de signal optique, également appelés splitter en langue anglaise, sont destinés à diviser un signal d'entrée en une pluralité de signaux de sortie.

Les modules d'opérateur 2 peuvent également comprendre une zone 23 de lovage qui est une zone de gestion de la surlongueur de fibres. La zone 23 peut être un compartiment du module 2 dans lequel sont stockées les surlongueurs de fibres.

Le module d'utilisateurs 3 comprend des connecteurs 31 destinés à connecter des fibres optiques issus des modules d'opérateur 2 à des fibres optiques dirigées vers les utilisateurs. La connexion d'un connecteur 21 d'un module d'opérateur 2 à un connecteur 31 du module d'utilisateurs 3 est réalisée à l'aide d'un cordon de raccordement 4 muni d'un connecteur à chacun de ses extrémités. Les deux connecteurs du cordon 4 sont des prises mâles qui sont insérées dans les prises femelles (raccords) des connecteurs 21 des modules d'opérateurs 2. Les modules d'opérateur 2 peuvent être munis d'une ouverture 5 située latéralement, du côté du module d'utilisateurs 3. Le module d'utilisateurs 3 également des ouvertures longitudinales placées en face des ouvertures 5 des modules d'opérateurs 2, de manière à permettre le passage du cordon 4 entre les deux modules 2,3. Les modules 2,3 peuvent comprendre à la fois une ouverture latérale et des ouvertures longitudinales, de manière à ce que chaque module 2,3 puisse être utilisé indifféremment en tant que module d'opérateur 2 ou en tant que module d'utilisateurs 3.

Grâce à cette disposition du module d'utilisateurs 3 à côté des modules d'opérateur 2, le passage des cordons 4 vers depuis un module d'opérateur 2 vers le module d'utilisateurs 3 est réalisé à un niveau différent pour chaque opérateur, ce qui évite aux cordons 4 de devoir se croiser.

Les connecteurs 31 du module d'utilisateurs 3 peuvent être disposés sur la face arrière du module 3 d'utilisateurs, de manière à être accessibles de face pour l'installateur. Ils peuvent être alignés verticalement.

La disposition de face des connecteurs 21,31 permet de visualiser aisément les connecteurs 21,31 et de réaliser les connexions efficacement.

Les modules d'opérateur 2 peuvent être disposés horizontalement dans le sens de la longueur, et sont empilés les uns au-dessus des autres. Le module d'utilisateurs 3, et en particulier les connecteurs 31, est disposé à côté de l'empilement des modules d'opérateur 2, dans la hauteur de l'empilement, c'est-à-dire dans un espace situé entre l'extrémité inférieure de l'empilement des modules d'opérateur 2 et l'extrémité supérieure de l'empilement.

Grâce à cette configuration, la connexion entre un module d'opérateurs et le module d'utilisateurs est simplifiée, car il n'est pas nécessaire de croiser d'autres modules d'opérateur lors de l'installation. La gestion des raccords s'effectue principalement dans le module d'utilisateurs vertical, tandis que la surlongueur est gérée dans le module d'opérateur horizontal. Ainsi, lors de la connexion et de la déconnexion d'un cordon, seuls les raccords appropriés sont accessibles. Les modules des autres opérateurs peuvent rester fermés et inaccessibles, ce qui sécurise les fibres optiques. Enfin, l'identification visuelle est simplifiée, le module d'utilisateurs vertical recevant les fibres des utilisateurs tandis que les modules d'opérateur horizontaux accueillent le réseau à partir des opérateurs.

## Revendications

1. Dispositif (1) modulaire de connexion de fibres optiques d'un réseau de communication externe à des fibres optiques d'un réseau d'utilisateurs, le dispositif (1) comprenant :
- une pluralité de modules d'opérateurs de télécommunications (2), chaque module d'opérateur (2) étant connecté à des fibres optiques d'un réseau de communication externe, et
- un module d'utilisateurs (3), connecté à des fibres optiques d'un réseau d'utilisateurs,
les modules (2,3) étant des éléments distincts et séparables,
les modules d'opérateurs (2) et le module d'utilisateurs (3) étant munis de connecteurs (21,31), la connexion entre les connecteurs (21) d'un module d'opérateur (2) et les connecteurs (31) du module d'utilisateurs étant réalisée à l'aide de cordons de raccordement (4),
**caractérisé en ce que** les modules d'opérateurs (2) sont empilés les uns au-dessus des autres, formant ainsi un empilement de modules d'opérateur, et **en ce que** le module d'utilisateurs (3) est disposé à côté dudit empilement, dans la hauteur de l'empilement,
et **en ce que** chaque module d'opérateur (2) comprend une ouverture placée en vis-à-vis d'une ouverture (5) du module d'utilisateurs (3), de manière à permettre le passage de cordons de raccordement (4) depuis le module d'opérateur (2) vers le module d'utilisateurs (3),
de sorte que le passage des cordons de raccordement (4) depuis un module d'opérateur (2) vers le module d'utilisateurs (3) est réalisé à un niveau différent pour chaque opérateur (2).

2. Dispositif (1) selon la revendication 1, **caractérisé en ce que** les modules d'opérateur (2) et le module d'utilisateurs (3) sont de forme allongée et **en ce que**, en configuration opérationnelle du dispositif (1), les modules d'opérateur (2) sont disposés de manière à ce que leurs axes longitudinaux soient horizontaux et **en ce que** le module d'utilisateurs (3) est disposé de manière à ce que son axe longitudinal soit vertical.

3. Dispositif (1) selon la revendication 1 ou 2, **caractérisé en ce que** chaque module d'opérateur (2) comprend une ou plusieurs cassettes (22) de lovage de fibres et de maintien d'épissures.

4. Dispositif (1) selon l'une des revendications 1 à 3, **caractérisé en ce que** chaque module d'opérateur (2) comprend un compartiment (23) de lovage de fibres.

5. Dispositif (1) selon la revendication 4, **caractérisé en ce que** les connecteurs (21) des modules d'opérateurs (2) sont disposés de manière à faire face à l'utilisateur en configuration opérationnelle du dispositif.

6. Dispositif (1) selon l'une des revendications 1 à 5, **caractérisé en ce que** le module d'utilisateurs (3) est muni de connecteurs (31) alignés verticalement.

7. Dispositif (1) selon la revendication 6, **caractérisé en ce que** les connecteurs (31) du module d'utilisateurs (3) sont disposés de manière à faire face à l'utilisateur en configuration opérationnelle du dispositif.

8. Utilisation d'un dispositif (1) selon l'une des revendications 1 à 7 pour la connexion de fibres optiques d'un réseau de communication externe à des fibres optiques d'un réseau d'utilisateurs.

## Patentansprüche

1. Modulare Verbindungsvorrichtung (1) von Lichtleitfasern eines externen Kommunikationsnetzes mit Lichtleitfasern eines Benutzernetzes, wobei die Vorrichtung (1) umfasst:
- eine Vielzahl von Telekommunikationsanbietermodulen (2), wobei jedes Anbietermodul (2) mit Lichtleitfasern eines externen Kommunikationsnetzes verbunden ist, und
- ein Benutzermodul (3), das mit Lichtleitfasern eines Benutzernetzes verbunden ist,
wobei die Module (2, 3) unterschiedliche und trennbare Elemente sind,
wobei die Anbietermodule (2) und das Benutzermodul (3) mit Verbindern (21, 31) ausgestattet sind, wobei die Verbindung zwischen den Verbindern (21) eines Anbietermoduls (2) und den Verbindern (31) des Benutzermoduls mit Hilfe von Anschlussschüren (4) durchgeführt ist,
**dadurch gekennzeichnet, dass** die Anbietermodule (2) übereinander gestapelt sind, wodurch sie einen Anbietermodulstapel bilden, und dass das Benutzermodul (3) neben dem Stapel in der Höhe des Stapels angeordnet ist,
und dass jedes Anbietermodul (2) eine Öffnung gegenüber einer Öffnung (5) des Benutzermoduls (3) umfasst, um den Durchgang von Anschlussschnüren (4) vom Anbietermodul (2) zum Benutzermodul (3) zu erlauben,
wobei der Durchgang der Anschlussschnüre (4) von einem Anbietermodul (2) zu dem Benutzermodul (3) für jeden Anbieter (2) auf einer unterschiedlichen Ebene durchgeführt wird.

2. Vorrichtung (1) nach Anspruch 1, **dadurch gekennzeichnet, dass** die Anbietermodule (2) und das Benutzermodul (3) länglich geformt sind und dass die Anbietermodule (2) in operativer Konfiguration der Vorrichtung (1) derart angeordnet sind, dass ihre Längsachsen horizontal sind und dass das Benutzermodul (3) derart angeordnet ist, dass seine Längsachse vertikal ist.

3. Vorrichtung (1) nach Anspruch 1 oder 2, **dadurch gekennzeichnet, dass** jedes Anbietermodul (2) eine oder mehrere Faserspleiß- und Spleißhalte-Kassetten (22) umfasst.

4. Vorrichtung (1) nach einem der Ansprüche 1 bis 3, **dadurch gekennzeichnet, dass** jedes Anbietermodul (2) ein Faserspleißfach (23) umfasst.

5. Vorrichtung (1) nach Anspruch 4, **dadurch gekennzeichnet, dass** die Verbinder (21) der Anbietermodule (2) so angeordnet sind, dass sie dem Benutzer in operativer Konfiguration der Vorrichtung gegenüberliegen.

6. Vorrichtung (1) nach einem der Ansprüche 1 bis 5, **dadurch gekennzeichnet, dass** das Benutzermodul (3) mit vertikal ausgerichteten Verbindern (31) ausgestattet ist.

7. Vorrichtung (1) nach Anspruch 6, **dadurch gekennzeichnet, dass** die Verbinder (31) des Benutzermoduls (3) derart angeordnet sind, dass sie dem Benutzer in operativer Konfiguration der Vorrichtung gegenüberliegen.

8. Verwendung einer Vorrichtung (1) nach einem der Ansprüche 1 bis 7 für die Verbindung von Lichtleitfasern eines externen Kommunikationsnetzes mit Lichtleitfasern eines Benutzernetzes.

## Claims

1. A modular device (1) for connecting optical fibers of an external communications network to optical fibers of a user network, the device (1) comprising:
- a plurality of telecommunications operator modules (2), each operator module (2) being connected to optical fibers of an external communications network, and
- a user module (3), connected to optical fibers of a user network,
the modules (2,3) being distinct and separable elements, the operator modules (2) and the user modules (3) being provided with connectors (21, 31), the connection between the connectors (21) of an operator module (2) and the connectors (31) of the user module being made by means of connecting cords (4),
**characterized in that** the operator modules (2) are stacked up above each other, thereby forming a stack of operator modules, and **in that** the user module (3) is positioned on the side of said stack, in the height of the stack,
and **in that** each operator module (2) comprises an aperture placed facing an aperture (5) of the user module (3), so as to allow the passage of connecting cords (4) from the operator module (2) to the user module (3),
so that the passage of the connecting cords (4) from an operator module (2) to the user module (3) is achieved at a different level for each operator (2).

2. The device (1) according to claim 1, **characterized in that** the operator modules (2) and the user module (3) are of an elongated shape and **in that**, in an operational configuration of the device (1), the operator modules (2) are positioned so that their longitudinal axes are horizontal and **in that** the user module (3) is positioned so that its longitudinal axis is vertical.

3. The device (1) according to claim 1 or 2, **characterized in that** each operator module (2) comprises one or several cassettes (22) for coiling fibers and for maintaining splices.

4. The device (1) according to claims 1 to 3, **characterized in that** each operator module (2) comprises a compartment (23) for coiling fibers.

5. The device (1) according to claim 4, **characterized in that** the connectors (21) of the operator modules (2) are positioned so as to face the user in an operational configuration of the device.

6. The device (1) according to one of claims 1 to 5, **characterized in that** the user module (3) is provided with vertically aligned connectors (31).

7. The device (1) according to claim 6, **characterized in that** the connectors (31) of the user module (3) are positioned so as to face the user in an operational configuration of the device.

8. The use of a device (1) according to one of claims 1 to 7 for connecting optical fibers of an external communications network to optical fibers of a user network.
